# EUROPÄISCHE PATENTANMELDUNG

(11) **EP 2 191 932 A1**
(43) Veröffentlichungstag der Anmeldung: **02.06.2010**
(21) Anmeldenummer: 08020735.0
(22) Anmeldetag: 28.11.2008
(51) Int. Cl.: B23Q 1/76, B23Q 11/08

(54) **Lünette**

(71) Anmelder: SMW-AUTOBLOK Spannsysteme GmbH, 88074 Meckenbeuren (DE)
(72) Erfinder: Rehm, Fritz, Dipl.-Ing., 88094 Oberteuringen (DE)
(74) Vertreter: Engelhardt, Volker

(57) **Zusammenfassung**

Bei einer Lünette (1) zum zentrischen Spannen von stangenförmigen Werkstücken (3) kreisförmigen Durchmessers auf einer Drehmaschine, bestehend aus drei in einer gemeinsamen Ebene angeordneten Haltegliedern (4, 5, 6), von denen die beiden äußeren Halteglieder (5, 6) um in einem Gehäuse (2) der Lünette (1) gelagerten Gelenkbolzen (7) verschwenkbar sind und von denen das mittlere Halteglied (4) relativ zum Werkstück (3) geradlinig verstellbar ist, und aus vier an dem Gehäuse (2) außenseitig angebrachte, parallel und beabstandet zueinander verlaufenden Abstreifleisten (9), die jeweils paarweise einem der beiden äußeren Halteglieder (5, 6) zugeordnet sind, sollen Verunreinigungen des Inneren des Gehäuses (2) vermieden werden und gleichzeitig soll der für den Überdruck im Inneren des Gehäuses (2) notwendige Luftverbrauch reduziert sein.

Dies wird dadurch erreicht, dass im Inneren des Gehäuses (2) vier U-förmige oder runde Aufnahmeöffnungen (11) eingearbeitet sind, die parallel zu den die beiden äußeren Haltegliedern (5, 6) abstützenden Gelenkbolzen (7) verlaufen, dass zwischen jeweils zwei der vier Aufnahmeöffnungen (11) eines der beiden äußeren Halteglieder (5, 6) angeordnet ist und dass in jede der vier Aufnahmeöffnungen (11) eine Dichtleiste (12) eingesetzt ist, die mittels einer von dieser und/oder einem Federelement (13) erzeugten Vorspannkraft auf der Oberfläche des jeweiligen Haltegliedes (5, 6) aufliegt.

## Beschreibung

Die Erfindung bezieht sich auf eine Lünette zum zentrischen Spannen von stangenförmigen Werkstücken kreisförmigen Durchmessers auf einer Drehmaschine nach dem Oberbegriff des Patentanspruches 1.

Derartige Lünetten haben sich auf dem Markt bewährt und wurden von der Patentanmelderin entwickelt. Diese den Stand der Technik bildende Lünette kann beispielsweise aus der DE 10 2007 029 492.3 entnommen werden. Das Ziel, das dieser Erfindung zugrunde liegt, ist die optimale Zuführung von Kühlmittel aus der Abstreifleiste in Richtung des Haltegliedes. Durch die Kühlmittelzufuhr soll zum Einen während der spanabhebenden Bearbeitung an dem Werkstück die notwendige und erforderliche Kühlung sein, und zum Anderen dient das Kühlmittel als Sperrschicht, um das Innere des Gehäuses gegen die Späne und sonstige Partikel, die in Richtung des Gehäuses geschleudert sind, abzuschirmen.

Zusätzlich werden an der Abstreifleiste, die aus Metall hergestellt ist, Dichtlippen, beispielsweise aus Gummi, befestigt, die auf der Oberfläche des Haltegliedes aufliegen. Auch durch diese Dichtlippen soll das Eindringen von Spänen und sonstigen Partikeln in das Innere des Gehäuses vermieden werden.

Als nachteilig bei solchen Lünetten hat sich nunmehr herausgestellt, dass die aus Gummi gefertigten Dichtungen dem unmittelbaren Einfluss der Metallspäne ausgesetzt sind, und durch die entsprechenden Arbeitsbedingungen nach einer relativ kurzen Zeitperiode kaputt gehen. Dies führt dazu, dass die Dichtlippen auszutauschen sind. Während dieser Reparaturdauer steht die Werkzeugmaschine jedoch still, so dass dies zu erheblichen Betriebsstörungen und Stillstandszeiten führt.

Ferner wird das Innere des Gehäuses mit Überdruck beaufschlagt, so dass aus diesem Luft nach außen strömt. Der Luftüberdruck in dem Inneren des Gehäuses soll bewirken, dass die Späne nicht entlang der Oberfläche der Halteglieder in das Innere des Gehäuses gelangen und dort zu erheblichen Verunreinigungen führen, die die Lünette insgesamt beschädigen. Da jedoch die an den Abstreifleisten angebrachten Gummidichtlippen nicht zuverlässig auf der Oberfläche der jeweiligen Halteglieder aufliegen und oftmals bereits nach einer kurzen Einsatzzeit rissig sind, strömt die in das Innere des Gehäuses eingeleitete Überdruckluft nach außen ab. Folglich entsteht ein erhöhter Luftverbrauch, durch den die Betriebskosten für die Lünette ansteigen.

Es ist daher Aufgabe der Erfindung, eine Lünette der eingangs genannten Gattung derart weiterzubilden, dass sowohl das Eindringen von Kühlmittel als auch von Metallspänen und sonstigen Schmutzpartikeln in das Innere des Gehäuses zuverlässig und dauerhaft ausgeschlossen sind, und dass gleichzeitig der notwendige Luftverbrauch zur Erzeugung des Überdruckes im Inneren des Gehäuses möglichst gering gehalten ist.

Diese Aufgaben werden erfindungsgemäß durch die Merkmale des kennzeichnenden Teiles von Patentanspruch 1 gelöst.

Weitere vorteilhafte Weiterbildungen der Erfindung ergeben sich aus den Unteransprüchen.

Dadurch, dass im Inneren des Gehäuses eine U-förmige, also schlitzartige, Aufnahmeöffnung eingearbeitet ist, in die eine elastische oder semielastische Abstreifleiste eingesetzt ist, wird eine Anlage zwischen dieser und dem jeweiligen äußeren Halteglied geschaffen, so dass die im Inneren des Gehäuses einströmende Luft durch die Abstreifleiste daran gehindert ist, nach Außen abzuströmen und zum Anderen wird eine Kapselung des Gehäuses der Lünette erreicht, denn die im Bearbeitungsbereich der Lünette verwirbelten Metallspäne sowie das auf das zu bearbeitende Werkstück einströmende Kühlmittel werden sowohl von der aus Metall gefertigten Abstreifleiste als auch von den im Inneren des Gehäuses angeordneten Dichtleisten von dem Eindringen in das Gehäuse abgehalten. Zunächst wirkt die an der Außenseite des Gehäuse befestige Abstreifleiste als Prallplatte, durch die ein Großteil des verwirbelten Kühlmittels und der sich bewegenden Metallspäne abgefangen wird und zum Anderen liegt die jeweilige Dichtleiste unter Vorspannung auf der Oberfläche der beiden äußeren Halteglieder an, so dass eine zuverlässige und nahezu luftdichte Abschirmung geschaffen ist.

Die jeweiligen paarweise eines der beiden äußeren Halteglieder einschließenden Dichtleisten behindern die Verschwenkbewegungen der Halteglieder nicht, sondern liegen vielmehr flächig auf der Oberfläche der Halteglieder auf, um eine möglichst vollständige luftdichte Kapselung des Inneren des Gehäuses zu erreichen. Somit wird der Luftverbrauch, der notwendig ist, um den Überdruck im Inneren des Gehäuses bereitzustellen, möglichst gering gehalten. Dies reduziert die Betriebskosten für den Einsatz der Lünette erheblich.

In der Zeichnung ist ein erfindungsgemäßes Ausführungsbeispiel einer Lünette dargestellt, das nachfolgend näher erläutert wird. Im Einzelnen zeigt:
- Figur 1: die Lünette mit drei Haltegliedern zur Einspannung von Werkstücken, in perspektivischer Ansicht,
- Figur 2a: die Lünette gemäß Figur 1 mit einer Dichtleiste aus Kunststoff oder Metall, die durch ein Federelement auf die Oberfläche eines der äußeren Halteglieder aufgedrückt ist, in Seitenansicht,
- Figur 2b: die Lünette gemäß Figur 2a in vergrößerter Darstellung und im Schnitt,
- Figur 2c: die Lünette gemäß Figur 2a um 90° gedreht,
- Figur 3a: die Lünette gemäß Figur 1 mit einer aus Gummi hergestellten, elastischen Dichtleiste, die auf der Oberfläche eines der äußeren Halteglieder unter Vorspannung aufliegt, in Seitenansicht,
- Figur 3b: die Lünette gemäß Figur 3a, in vergrößerter Darstellung und im Schnitt, und
- Figur 3c: die Lünette gemäß Figur 3a um 90° gedreht.

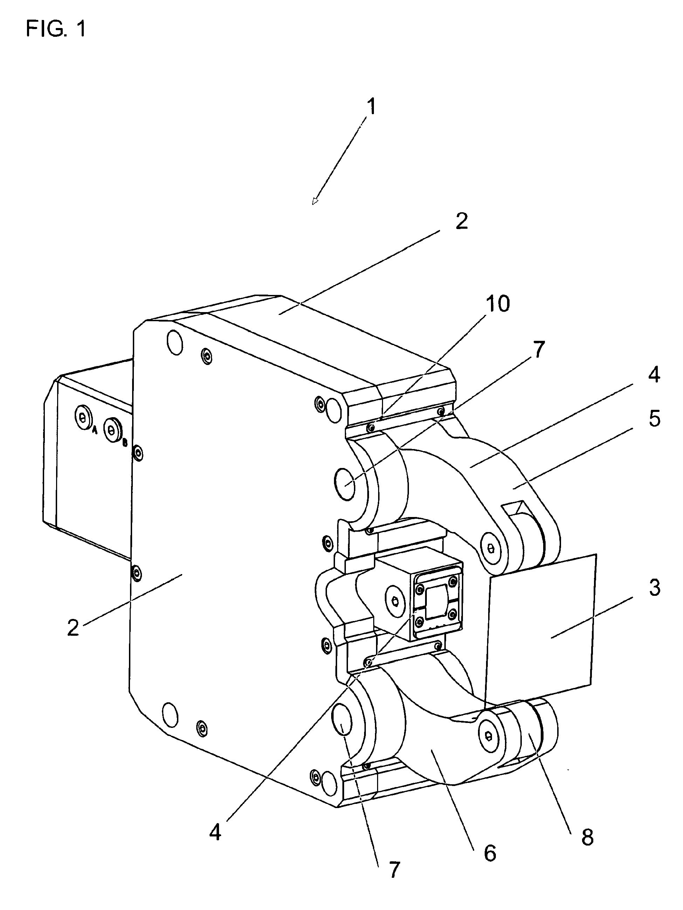

Die in Figur 1 abgebildete Lünette 1 dient zum zentrischen Spannen von stangenförmigen Werkstücken 3, die üblicherweise einen kreisförmigen Durchmesser aufweisen. Die Lünette 1 ist an einer nicht dargestellten Drehmaschine angebracht.

Zur Fixierung der zu bearbeitenden Werkstücke 3 besteht die Lünette 1 aus drei in einer gemeinsamen Ebene angeordneten Haltegliedern 4, 5 und 6, von denen die beiden äußeren Halteglieder 5 und 6 um einen in einem Gehäuse 2 der Lünette 1 gelagerten Gelenkbolzen 6, verschwenkbar sind. Somit können die beiden äußeren Halteglieder 5 und 6 an dem von dem Gelenkbolzen gebildeten Drehpunkt bewegt werden, um den Öffnungswinkel zur Aufnahme der Werkstücke zu vergrößern bzw. zu verkleinern, so dass die Werkstücke 3 eingespannt und gelöst werden können.

Das mittlere Halteglied 4 ist relativ zu dem Werkstück 3 geradlinig verstellbar, so dass durch die drei Halteglieder 4, 5 und 6 das Werkstück zentrisch in Form einer Dreipunktlagerung in diesen gehalten und eingespannt ist. An den freien Enden der drei Halteglieder 4, 5 und 6 ist jeweils eine Laufrolle 8 drehbar gelagert, um die Aufnahme des Werkstückes 3 zu erleichtern.

An der dem Bearbeitungszentrum, also dem von den drei Haltegliedern 4, 5 und 6 gebildeter Bereich, zugewandten Stirnseite des Gehäuses 2 der Lünette 1 sind vier Abstreifleisten 9 aus Metall mittels Befestigungsschrauben 10 angebracht. Zwei der vier Abstreifleisten 9 bilden ein Paar, zwischen denen eines der beiden äußeren Halteglieder 5 oder 6 verschwenkbar angeordnet ist. Zwischen den jeweiligen paarweise zusammenwirkenden Abstreifleisten 9 und der Oberfläche der Halteglieder 5 oder 6 ist ein Luftspalt vorgesehen. Somit wird der Verschwenkwinkel der Halteglieder 5 und 6 durch die Abstreifleisten 9 nicht behindert; diese dienen vielmehr dazu, die von dem Bearbeitungszentrum bei der spanabhebenden Bearbeitung des Werkstückes 3 anfallende Späne aus Metall von dem Gehäuse 2 abprallen zu lassen, so dass die Metallspäne nicht das Gehäuse 2 beschädigen.

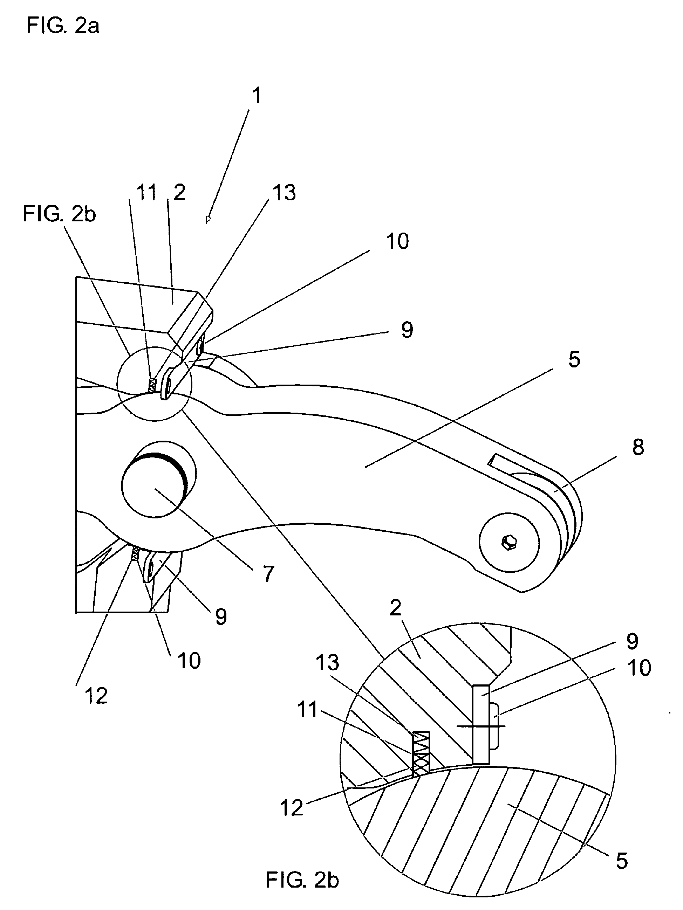

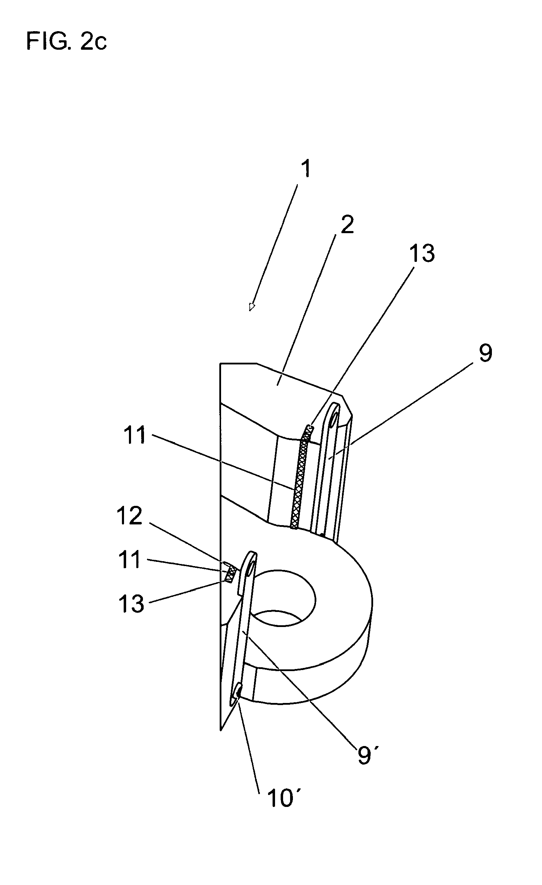

Aus den Figuren 2a, 2b und 2c kann entnommen werden, dass beabstandet zu der jeweiligen Abstreifleiste 9, die über die beiden Befestigungsschrauben 10 an der Stirnseite des Gehäuses 2 befestigt ist, eine U-förmig ausgestaltete Ausnehmung 11 in das Innere des Gehäuses 2 eingearbeitet ist. Die Ausnehmung 11 erstreckt sich dabei parallel zu der jeweiligen Abstreifleiste 9. In jede der vier Ausnehmungen 11 ist zunächst ein Federelement 13 eingesteckt, das beispielsweise als Federleiste oder auch aus einer Vielzahl von auf einer Schiene oder dergleichen befestigten Spiralfedern bestehen kann.

Die Dichtleiste 12 ist aus einem harten Kunststoff oder einem weichen Metall, beispielsweise Messing, gefertigt, so dass durch die von der Federleiste 13 erzeugte Vorspannkraft die Dichtleiste plan auf die Oberfläche des Haltegliedes 5 oder 6 aufgepresst ist.

Auf das freie Ende des Federelementes 13 ist eine quaderförmige Dichtleiste 12 eingesetzt. Die Breite der Dichtleiste 12 entspricht dabei der Breite der Ausnehmung 11, so dass die Dichtleiste 12 in der Ausnehmung 11 fixiert ist. Durch die zwischen dem Gehäuse 2 und der Dichtleiste 12 angeordnete Federleiste 13 wird eine Vorspannkraft erzeugt, durch die die Dichtleiste 12 aus der Ausnehmung 11 in Richtung des jeweiligen Haltegliedes 5 oder 6 gedrückt ist. Dadurch, dass die der Oberfläche des jeweiligen Haltegliedes 5 oder 6 zugewandte Stirnseite der Dichtleiste 12 an die Kontur der Oberfläche des jeweiligen Haltegliedes 5 oder 6 angepasst ist, liegt die Dichtleiste 12 flächig auf der Oberfläche des jeweiligen Haltegliedes 5 oder 6 auf.

Somit ist das Innere des Gehäuses 2 durch die Dichtleiste 12 luftdicht oder zumindest nahezu luftdicht nach außen gekapselt. Insbesondere der Luftspalt zwischen der Innenwand des Gehäuses 2 und den relativ zu diesem bewegbaren Haltegliedern 5 und 6 ist durch die Dichtleiste 12 verschlossen. Insbesondere der Figur 2c kann entnommen werden, dass die Dichtleiste 12 sich über die gesamte Breite des jeweiligen Haltegliedes 5 oder 6 erstreckt.

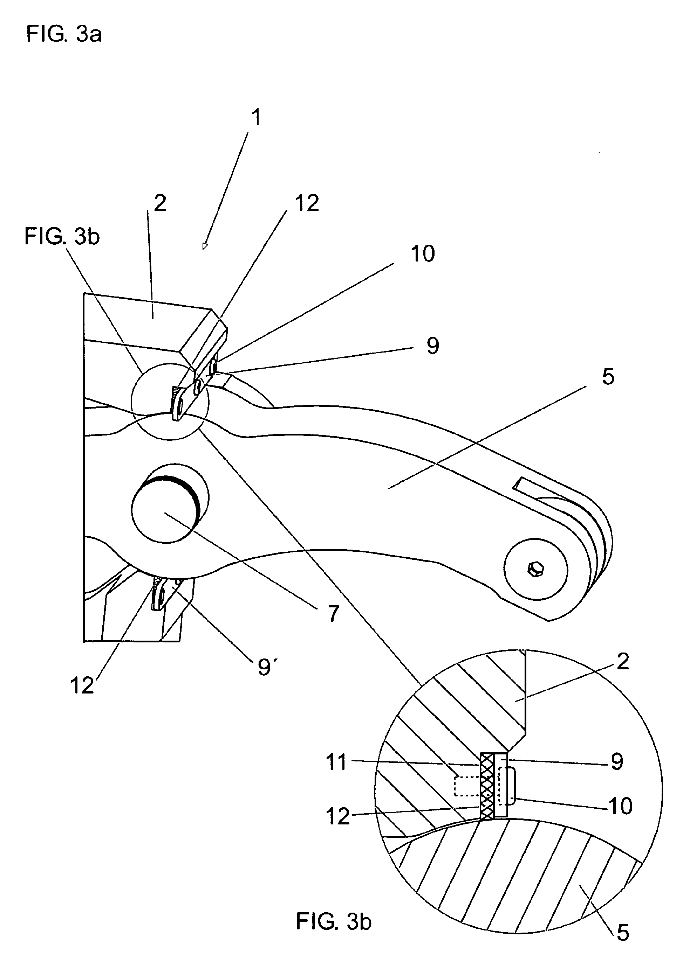

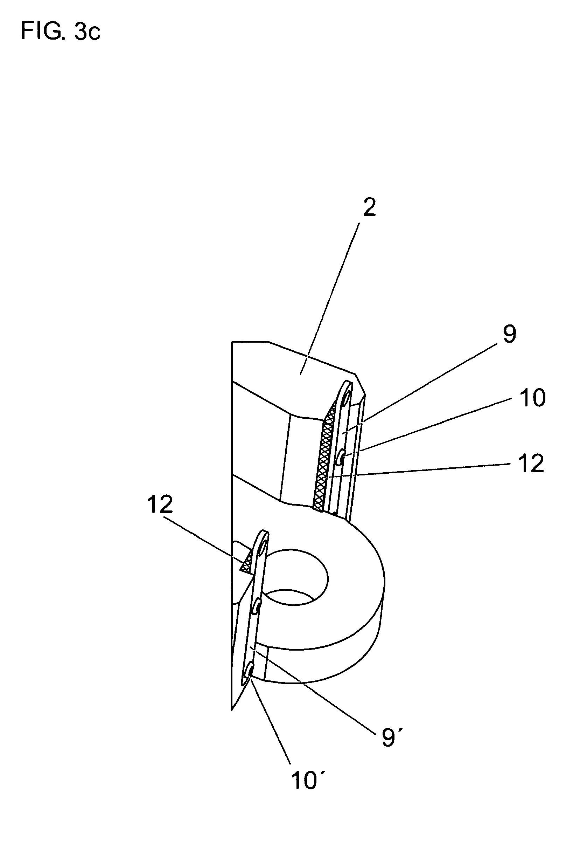

Den Figuren 3a, 3b und 3c liegt eine Dichtleiste 12 zugrunde, die aus einem elastischen Werkstoff, beispielsweise aus Gummi, Kautschuk oder Silikon, gefertigt ist. Die Höhe der Dichtleiste 12 ist dabei größer bemessen als die Tiefe der diese aufnehmenden Ausnehmung 11, so dass die Dichtleiste 12 aus der Ausnehmung 11 übersteht, und zwar in Richtung des jeweiligen Haltegliedes 5 oder 6. Nachdem das Halteglied 5 oder 6 montiert ist, drückt dieses die jeweilige Dichtleiste 12 in die Ausnehmung 11, so dass eine Vorspannkraft entsteht, durch die die Dichtleiste 12 auf der Oberfläche des jeweiligen Haltegliedes 5 oder 6 flächig anliegt.

Durch die vier Dichtleisten 12 und deren flächige Anlage auf der Oberfläche der Halteglieder 5 und 6 wird eine luftdichte oder zumindest nahezu luftdichte Kapselung des Inneren des Gehäuses 2 erreicht. Dies bewirkt zum Einen, dass die aus dem Bearbeitungszentrum herausgewirbelten Metallspäne und die dort vorhandene Kühlflüssigkeit nicht in das Innere des Gehäuses 2 vordringen können, denn zunächst werden die Metallspäne und die Kühlflüssigkeit durch die Abstreifleisten 9 in Form einer Prallwand aufgefangen und ferner dichten die vier Dichtleisten 12 in jeder Verschwenkposition der Halteglieder 5 und 6 das Innere des Gehäuses 2 gegenüber den eindringenden Metallspänen und der Kühlflüssigkeit ab.

Zum Anderen kann auch die im Inneren des Gehäuses 2 eingepresste Luft, durch die im Inneren des Gehäuses 2 gegenüber der Umgebung ein Überdruck entsteht, nicht ohne weiteres aus dem Luftspalt, der zwischen der Innenwand des Gehäuses 2 und den beiden äußeren Haltegliedern 5 und 6 vorhanden ist, entweichen, denn die vier Dichtleisten 12 kapseln das Innere des Gehäuses 2 mehr oder weniger luftdicht. Folglich wird der Luftverbrauch zur Erzeugung des Überdruckes reduziert. Durch die Reduzierung des Luftverbrauches zur Erzeugung des Überdruckes werden die Betriebskosten für die erfindungsgemäßen Lünetten 1 verringert.

Die Dichtleiste 12 kann bei allen beiden Ausführungsbeispielen einen rechteckförmigen oder einen runden Querschnitt aufweisen. Die Innenkontur der Ausnehmung 11 korrespondiert mit der Außenkontur der Dichtleiste 12. Dies bedeutet, dass bei einer runden Dichtleiste 12 die Innenkontur der Ausnehmung 11 rund ausgebildet ist und bei einer rechteckförmigen Dichtleiste 12 ist die Ausnehmung ebenso rechteckförmig. Wichtig ist, dass die jeweilige Dichtleiste 12 durch die Federleiste 13 aus der Ausnehmung 11 in Richtung des Haltegliedes 5 oder 6 gedrückt ist oder dass die Dichtleiste 12 aus der Ausnehmung 11 übersteht und durch die Montage der Halteglieder 5, 6 zusammengedrückt wird, wodurch in beiden Einbausituationen die erforderliche Vorspannkraft entsteht.

## Patentansprüche

1. Lünette (1) zum zentrischen Spannen von stangenförmigen Werkstücken (3) kreisförmigen Durchmessers auf einer Drehmaschine, bestehend aus drei in einer gemeinsamen Ebene angeordneten Haltegliedern (4, 5, 6), von denen die beiden äußeren Halteglieder (5, 6) um in einem Gehäuse (2) der Lünette (1) gelagerten Gelenkbolzen (7) verschwenkbar sind und von denen das mittlere Halteglied (4) relativ zum Werkstück (3) geradlinig verstellbar ist, und aus vier an dem Gehäuse (2) außenseitig angebrachte, parallel und beabstandet zueinander verlaufenden Abstreifleisten (9), die jeweils paarweise einem der beiden äußeren Halteglieder (5, 6) zugeordnet sind,
**dadurch gekennzeichnet,**
**dass** im Inneren des Gehäuses (2) vier U-förmige oder runde Aufnahmeöffnungen (11) eingearbeitet sind, die parallel zu den die beiden äußeren Haltegliedern (5, 6) abstützenden Gelenkbolzen (7) verlaufen, dass zwischen jeweils zwei der vier Aufnahmeöffnungen (11) eines der beiden äußeren Halteglieder (5, 6) angeordnet ist und dass in jede der vier Aufnahmeöffnungen (11) eine Dichtleiste (12) eingesetzt ist, die mittels einer von dieser und/oder einem Federelement (13) erzeugten Vorspannkraft auf der Oberfläche des jeweiligen Haltegliedes (5, 6) aufliegt.

2. Lünette nach Anspruch 1,
**dadurch gekennzeichnet,**
**dass** die Dichtleiste (12) aus einem harten Kunststoff oder aus einem weichen Metall, vorzugsweise Messing, hergestellt ist und dass zur Erzeugung der notwendigen Vorspannkraft die Höhe der Dichtleiste (12) größer bemessen ist als die Tiefe der Aufnahmeöffnung (11).

3. Lünette nach Anspruch 2,
**dadurch gekennzeichnet,**
**dass** die Breite der Dichtleiste (12) mit der Breite der Aufnahmeöffnung (11) korrespondiert und dass die Dichtleiste (12) in der Aufnahmeöffnung (11) ortsfest gehalten ist

4. Lünette nach einem der vorgenannten Ansprüche,
**dadurch gekennzeichnet,**
**dass** die Dichtleiste (12) in ihrem Querschnitt rund oder rechteckförmig ausgestaltet ist und dass die Innenkontur der Ausnehmung (11) an die Außenkontur der Dichtleiste (12) angepasst ist.

5. Lünette nach Anspruch 1,
**dadurch gekennzeichnet,**
**dass** in die Aufnahmeöffnung (11) eine oder mehrere der Federelemente (13) eingesetzt ist bzw. sind, durch die eine auf die in die Aufnahmeöffnung (11) integrierte Dichtleiste (12) einwirkende Vorspannkraft, die in Richtung des Haltegliedes (5, 6) ausgerichtet ist, erzeugt ist.

6. Lünette nach einem der vorgenannten Ansprüche,
**dadurch gekennzeichnet,**
**dass** die Dichtleiste (12) im wesentlich parallel zu einer der Abstreifleisten (9) verläuft und dass der Abstand zwischen der jeweiligen Dichtleiste (11) und der Abstreifleiste (9) möglichst gering bemessen ist.

7. Lünette nach einem der vorgenannten Ansprüche,
**dadurch gekennzeichnet,**
**dass** die von dem beiden Gelenkbolzen (7) gebildete Ebene zwischen den jeweiligen Dicht- und Abstreifleisten (11, 9)angeordnet ist.

8. Lünette nach einem der vorgenannten Ansprüche,
**dadurch gekennzeichnet,**
**dass** die dem jeweiligen Halteglied (5, 6) zugewandten Oberflächen der Dichtleisten (12) an dessen Außenkontur angepasst sind und dass die Dichtleisten (12) in jeder Verschwenkposition des jeweiligen Haltegliedes (5, 6) flächig auf dessen Oberfläche aufliegen.

9. Lünette nach einem der vorgenannten Ansprüche,
**dadurch gekennzeichnet,**
**dass** das Innere des Gehäuses (2) mittels der vier auf den Haltegliedern (5, 6) unter Vorspannung aufliegenden Dichtleisten (12) vollständig oder nahezu vollständig luftdicht gekapselt ist.

10. Lünette nach einem der vorgenannten Ansprüche,
**dadurch gekennzeichnet,**
**dass** zwischen der Oberfläche der beiden äußeren Haltegliedern (5, 6) und den dieser zugeordneten Abstreifleisten (9) ein möglichst gering bemessener Luftspalt vorgesehen ist.
